(19) Europäisches Patentamt
European Patent Office
Office européen des brevets

(11) Publication number: **0 189 642 B1**

(12) # EUROPEAN PATENT SPECIFICATION

(45) Date of publication of patent specification: **06.03.91** (51) Int. Cl.5: **C10L 1/30**

(21) Application number: **85307965.5**

(22) Date of filing: **01.11.85**

(54) **Fuel additives and fuel containing soluble platinum group metal compounds and use in internal combustion engines.**

(30) Priority: **04.12.84 US 677954**
**24.10.85 US 790738**

(43) Date of publication of application:
**06.08.86 Bulletin 86/32**

(45) Publication of the grant of the patent:
**06.03.91 Bulletin 91/10**

(84) Designated Contracting States:
**AT BE CH DE FR IT LI LU NL SE**

(56) References cited:
**DE-A- 2 500 683**
**FR-A- 1 272 916**
**LU-A- 68 881**
**US-A- 2 086 775**

**"Dictionary of organometallic compounds", vol. 2, Mo-Zr, 1984, pages 1500,1570,1572,1590,1594, Chapman and Hall, London, GB.**

**JOURNAL OF ORGANOMETALLIC CHEMISTRY, vol. 59, 1st October 1973, pages 411-428, Elsevier Sequoia SA, NL; H.C. CLARK et al.: "Reactions of(pi-1,5-cyclooctadiene)organoplatinum(II)-compounds and the synthesis of perfluoroalkylplatinum complexes"**

(73) Proprietor: **FUEL TECH, INC.**
**61 Taylor Reed Place**
**Stamford, CT 06906(US)**

(72) Inventor: **Bowers, Wayne E.**
**2340-P State Road 580, No. 173**
**Clearwater Florida 33575(US)**
Inventor: **Sprague, Barry N.**
**440 Malloy Road**
**West Haven Connecticut 06516(US)**

(74) Representative: **Lambert, Hugh Richmond et al**
**D. YOUNG & CO. 10 Staple Inn**
**London, WC1V 7RD(GB)**

**EP 0 189 642 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical field

The present invention relates to improving the performance of internal combustion engines, both gasoline and diesel; and, more particularly, to the formulation and use of fuel additives and fuels which burn more efficiently and with reduced noxious emissions.

### Background Art

Prior investigations involving the use of platinum group metals in internal combustion engines have led to the development of the catalytic converter for emissions reduction. Reliance upon costly mechanical equipment, while less than ideal or desirable, has become standard despite the efforts of the prior art to accomplish the same result through less costly combustion improvements in terms of better combustion conditions through engine design and fuel additives. The efforts in engine design have provided significant improvements, but the twin objectives of improved operating efficiency and reduced noxious emissions are difficult to achieve simultaneously.

Experience to date with fuel additives has been less successful, due in part to the complicated equipment necessitated for their introduction into the fuel supply and in part to their cost where they include more exotic catalytic materials. For example, in U.S. Patent 4,295,816, Robinson discloses an elaborate delivery system for introducing water-soluble platinum group metal salts through the air intake of internal combustion engines to deliver platinum group metal catalysts to the combustion chamber at a level no greater than 9 mg catalyst per kilogram of fuel.

In U.S. Patents 2,086,775 and 2,151,432, Lyons and McKone disclose adding from 0.001 to 0.085% (i.e., from 10 to 850 parts per million) of an organometallic compound or mixture to a base fuel such as gasoline, benzene, fuel oil, kerosene, or blends to improve various aspects of engine performance. Among the metals disclosed in U.S. 2,086,775 are cobalt, nickel, manganese, iron, copper, uranium, molybdenum, vanadium, zirconium, beryllium, platinum, palladium, chromium, aluminum, thorium and the rare earth metals, such as cerium. Among those disclosed in U.S. 2,151,432 are selenium, antimony, arsenic, bismuth, cadmium, tellurium, thallium, tin, barium, boron, cesium, didymium, lanthanum, potassium, sodium, tantalum, titanium, tungsten and zinc. In both disclosures, the preferred organometallic compounds were beta diketone derivatives and their homologues, such as the metal acetylacetonates, propionylacetonates, formylacetonates, and the like. Such compounds typically provide oxygen-to-metal ratios in the range of 1:1 to 1:10, and no essential feature linked to the presence of oxygen is disclosed.

The Lyons and McKone disclosures state that concentrations of from 0.001 to 0.04% (i.e., from 10 to 400 parts per million) are not effective to improve combustion efficiency as introduced, but may become so upon prolonged use as catalytically active deposits are built up in the combustion chamber. The disclosure further states that about 0.01% (i.e., 100 ppm) of the organometallic compound is usually sufficient, once the requisite amount of catalytically active deposits has been built up, to perpetuate that amount of deposits by replacement of losses therefrom. The compounds disclosed were, therefore, not capable of generating any instantaneous catalytic effect at low concentrations. Further no indication was made for preferred oxidation states for the metals disclosed.

Neither of the Lyons and McKone patents disclose the use of oxygenated solvents or point to the importance of high oxygen to metal ratios. In Demonstration 15 in U.S. Patent 2,086,775, palladium acetylacetonate was added to a fuel (not specifically identified, but presumably the leaded 65 octane gasoline employed in Demonstration 1) at a level of 0.002% (20 ppm). The weight ratio of oxygen to palladium was not mentioned, although by calculation it is found to be about 1 to 3, and the level of palladium is found to be about 10 ppm. No improvement in combustion was noted until after substantial driving.

In German Offenlegungsschrift 2,500,683, Brantl discloses that a wide variety of catalytic metals may be added to hydrocarbon fuels to reduce nitrogen monoxide and oxidize carbon monoxide at the moment of combustion in internal combustion engines. The disclosure states that organometallic or Grignard compounds of the metals lithium, sodium, lead, beryllium, magnesium, aluminum, gallium, zinc, cadmium, tellurium, selenium, silicon, boron, germanium, antimony and/or tin can be added to the fuel individually or as a mixture. Similarly, the metal complexes of the metals scandium, titanium, vanadium, chromium, manganese, iron, cobalt, nickel, copper, zinc, ruthenium, rhodium, palladium, osmium, iridium, platinum, silver, gold, gallium, molybdenum, lead and mercury, with different ligands, can be added to the fuel

individually or as a mixture. For the platinum group metals osmium, iridium, and platinum, broad concentrations of from 0.347 to 3.123 grams per liter of fuel are suggested for the various compositions listed in the disclosure, with the range for particularly favorable results being from 0.868 to 1.735 grams per liter of fuel. Considering the cost of these metals and the compositions containing them, there is a negative incentive for employing them at the high levels stated by the disclosure to be effective. Moreover, the tetramethyl platinum compound is not known to exist.

In U.S. Patent 2,402,427, Miller and Lieber disclose the use of certain diesel-fuel-soluble organic or organometallic compounds as ignition promoters at concentrations of from 0.02 to 3% (i.e., 200 to 30,000 parts per million). No platinum group metal compounds are identified and no indication is given that the disclosed compounds at the disclosed or lower levels would improve combustion in a gasoline internal combustion engine.

Other work done, in which cylinders of a diesel engine were coated with platinum metal, showed reductions in noxious emissions, but the coating wore off in a number of hours.

## Disclosure of Invention

The present invention comprises the application of certain platinum group metal compounds which are directly soluble in engine fuels, such as diesel fuel or gasoline, or solvents for use in internal combustion gasoline and diesel engines. The compounds, preferably in combination with a solvent for them which is also miscible in the fuel, are employed at very small, but catalytically effective levels of from 0.01 to about 1.0 parts of platinum group metal per one million parts of fuel (ppm). For the purposes of this description, all part per million figures are on a weight to volume basis, i.e., mg/liter, and percentages are given by weight, unless otherwise indicated.

According to one its aspects, the invention provides gasoline and diesel fuel additive compositions comprising a solution of a fuel-soluble platinum group metal compound in a solvent miscible in the fuel, the platinum group metal compound being present in an amount sufficient to supply from 0.01 to 1.0 parts per million of the platinum group metal when added to a predetermined amount of fuel.

Preferred solvents are oxygenated hydrocarbons such as ethanol, tetrahydrofuran, and methyl tertiary butyl ether, and will preferably be employed in amounts of less than 5% of the weight of the fuel. The oxygenated solvents will preferably. be employed in amounts sufficient to supply oxygen at a weight ratio to the platinum group metal of at least 1000:1.

Among the preferred platinum group metal compounds are platinum group metal coordination compounds comprising a platinum group metal having a +2 or +4 coordination state with at least one coordination site in the compound being occupied by a functional group containing at least one unsaturated carbon-to-carbon bond with an olefinic, acetylenic or aromatic pi bond configuration. Especially preferred compounds are those of the formula:

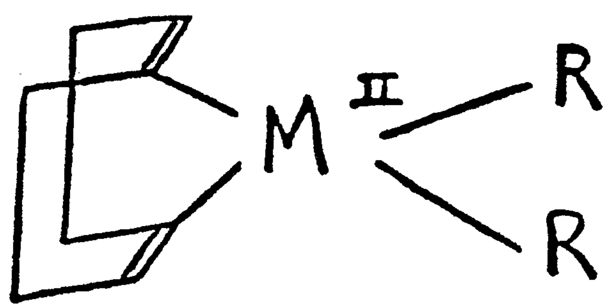

wherein M is a platinum group metal and R is benzyl, phenyl or nitrobenzyl.

According to another aspect of the invention, gasoline and diesel fuel compositions of improved properties are provided, which comprises gasoline or diesel fuel and an additive composition dissolved therein, said. additive composition comprising a fuel-soluble platinum group metal compound in an amount effective to supply from 0.01 to 1.0 parts of the platinum group metal per million parts of fuel.

According to a further aspect of the present invention, there is provided a method of increasing the utilizable energy of gasoline or diesel fuel for powering internal combustion engines, comprising admixing with said gasoline or diesel fuel an additive composition comprising a fuel-soluble platinum group metal compound in an amount effective to supply from 0.01 to 1.0 parts of the platinum group metal per part per million parts of fuel.

The additive compositions according to the invention improve operating efficiency of gasoline and diesel internal combustion engines in terms of increased power output per unit of gasoline burned and reduce the emissions of particulates and noxious gases such as carbon monoxide and nitrogen monoxide. The additives provide beneficial results upon immediate use and over long periods of continuous use.

For the purposes of this description, gasoline is defined as a mixture of volatile hydrocarbons for use in a spark-ignited internal combustion engine and having an octane rating [(Research + Motor)/2] of at least 80, typically about 87 to 89 or above, and according to the more preferred aspects of the invention as having less than 1.4 grams per gallon of lead. Most preferably, the gasoline will be "unleaded" and contain no more than 0.05 grams of lead per gallon and no more than 0.1% of sulfur. Gasoline typically has a BTU value of about 19,700 calories per pound, (11 kcal/g).

The gasoline additive compositions of this invention achieve the most reproducible effect in engines operated under lean conditions, namely an air to fuel ratio of about 14.7:1, and at compression ratios from about 7:1 to 9:1.

Diesel fuels, for the purposes of this description, are defined as fuel oil number 2 petroleum distillates of volatility and cetane number characteristics effective for the purpose of fueling internal combustion diesel engines.

As indicated above, the preferred platinum group metal compounds are coordination compounds. These compounds, especially those coordinated with certain high molecular weight (preferably above 100 daltons) olefinic functional groups, are stable in the presence of moisture. This is extremely important due to the amounts of water present in gasoline and diesel fuels. Gasoline, for example, will typically contain dissolved water in amounts on the order of 30 ppm and frequently contains higher levels of dispersed and bulk water.

Few, if any, platinum group metal coordination compounds which are directly soluble in gasoline or diesel fuel are available commercially. Compounds which are available often contain objectionable functional groups containing halogen and phosphorus and, therefore, are less than preferred for many internal combustion applications. Preferably, the compounds according to the present invention will have no phosphorus or have low levels which are free of significant disadvantages. We have discovered that certain platinum group metal compounds can be prepared which are soluble and stable in the fuels and actively catalyze the combustion of gasoline and diesel fuel in internal combustion engines and reduce noxious emissions when introduced as an integral part of the fuel.

The preferred class of materials used include platinum group metal coordination states II and IV. Compounds in the lower (II) state of oxidation are preferred due to their function in generating the catalytic effect. A significant feature of the invention is the use of platinum group metal II coordination compound having at least one coordination site occupied by a functional group containing an unsaturated carbon-to-carbon bond of the olefinic, acetylenic or aromatic pi bond configuration. Preferably, two or more of the coordination sites will be occupied by such functional groups since the stability and solubility in gasoline and diesel fuel of compounds having such multiple functional groups are improved. While wishing not to be bound to any particular theory, it is believed that such preferred compounds in the lowest possible oxidant state are the most beneficial for producing instantaneous catalytic effect.

Occupation of one or more coordination sites with the following unsaturated functional groups have been found useful:

1. Benzene and analogous aromatic compounds such as anthracene and naphthalene.
2. Cyclic dienes and homologues such as cyclooctadiene, methyl cyclopentadiene, and cyclohexadiene.
3. Olefins such as nonene, dodecene, and polyisobutenes.
4. Acetylenes such as nonyne and dodecyne.

These unsaturated functional groups, in turn, can be substituted with nonhalogen-, substituents such as alkyl, carboxyl, amino, nitro, hydroxyl and alkoxyl groups. Other coordination sites can be directly occupied by such groups.

The general formula for the preferred coordination II compounds is:

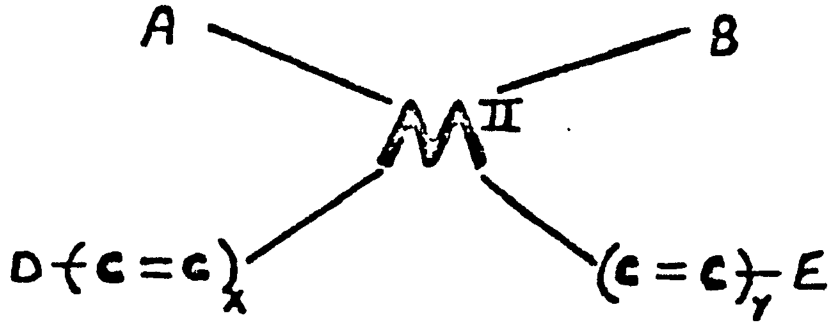

where $M^{II}$ represents the platinum group metal, with a valence of +2, where A, B, D, and E are groups such as alkoxy, carboxyl, etc. described above, where $(C = C)_x$ and $(C = C)_y$ represent unsaturated functional groups coordinated with the platinum group metal, and where x and y are any integer.

Platinum group metals include platinum, palladium, rhodium, ruthenium, osmium, and iridium. Compounds including platinum, palladium and rhodium are preferred in the practice of this invention.

The most preferred platinum group coordination compounds are those represented by the following formula:

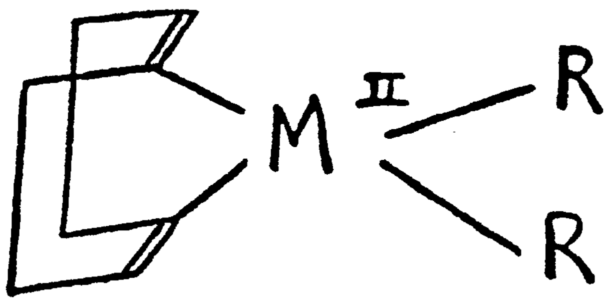

wherein M is a platinum group metal and R is benzyl, phenyl or nitrobenzyl.

The platinum group metal compound will be added to gasoline or diesel fuel in an amount effective to improve engine performance in terms of operating efficiency or emissions reduction. Typically, the compound will supply an amount of the metal within the range of from 0.01 to 1.0 parts of the platinum group metal per one million parts of gasoline (ppm w/v). A more preferred range is from 0.05 to 0.5 ppm, and most preferably, the platinum group metal will be supplied at a level of from 0.1 to 0.3 ppm on this same basis.

The fuel additive composition will preferably include a solvent which is miscible in the intended fuel, be it gasoline or diesel fuel. Certain of the solvents provide enhancements in the effectiveness of the platinum group metal compound and are preferred for this reason. Among the preferred solvents are oxygenated hydrocarbons, such as alcohols, heterocyclic oxygen compounds and ethers, that is to say fuel miscible hydrocarbon solvents containing either one or more heterocyclic oxygen atoms in the hdyrocarbon chain or one or more oxygen containing groups, including ketonic (O=) groups, attached to the hydrocarbon chain, either in terminal or non-terminal positions. Particularly preferrd compounds are: 1 to 4 carbon alcohols, especially ethanol; tetrahydrofuran; and methyl tertiary butyl ether. Some of these compunds, as will be seen from the examples which follow, show especially strong enhancements with particular platinum group metal coordination compounds. Octyl nitrate functions well in diesel fuel additives.

The solvent will preferably be employed at a concentration of up to 5% of the fuel and typically greater than 0.25%. Solvent concentrations of from 0.25 to 2.5% are preferred, and are most preferably 1.0% or less, and in some cases show surprising improvements in additive performance when employed at these levels.

The preferred fuel additives will employ sufficient amounts of platinum group metal compounds and oxygenated solvent to provide a weight ratio of oxygen to platinum group metal of from 1,000:1 to 100,000:1, preferably greater than 3,500:1. More preferred oxygen to platinum group metal weight ratios are from 5,000:1 to 35,000:1.

The fuel additive compositions can contain other additives such as detergents, antioxidants and octane improvers which are known as beneficial, but the use of such is not an essential feature of the invention.

The following examples are presented for the purpose of further illustrating and explaining the present

invention and the best mode for carrying it out, and are not to be taken as limiting.

Example 1

Dibenzyl cyclooctadiene Pt II was used as a catalyst in unleaded gasoline supplied to an automobile engine.

Production of dibenzyl cyclooctadiene platinum II was accomplished by slurrying 24.0 grams (0.064 mole) cyclooctadienyl Pt II dichloride in 200 milliliters of xylene. To the resultant mixture was added 0.5 mole benzyl magnesium chloride in diethyl ether (300 milliliters). The Grignard reaction was continued overnight, followed by hydrolysis with saturated ammonium sulfate solution in an ice bath. Following hydrolysis, the mixture was shaken vigorously and the layers were then allowed to separate. The organic phase was collected, dried over anhydrous sodium sulfate, and the residual diethyl ether was removed, leaving a solution of the product in xylene. This product has the structure:

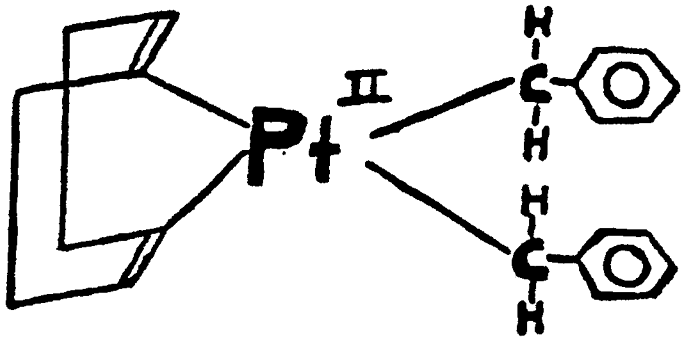

The xylene solution of the platinum compound (0.17% by weight platinum) was admixed with other fuel additive components set forth in Table 1A below.

A series of dynamometer tests were conducted, in which a 1984 Buick V-6 spark ignition engine was connected to and loaded by an eddy current dynamometer. The engine had the following specifications:

| | |
|---|---|
| Engine Type | Buick 90°V-6 |
| Bore and Stroke | 3.800 x 3.400in. (9.652 x 8.636 cm) |
| Piston Displacement | 231 cu. in. (3785.4 $cm^3$) |
| Compression Ratio | 8.0:1 |
| Carburetor Type | 2 BBL-ROCH |
| Air - Fuel/Ratio | 14.7:1 |

Data gathered during comparative engine tests run on the Buick V-6 engine using unleaded Indolene gasoline with a platinum-based fuel additive formulation based on the following ingredients with a fuel employing all components of the formulation except the platinum compound:

Table 1A

| | Percent by Weight |
|---|---|
| Xylene | 58.6 |
| Methyl Tertiary Butyl Ether | 40.5 |
| Detergent (Ethyl MPA-448) | 0.9 |
| Platinum Coordination Compound as prepared above | 0.012 |

This platinum compound has the following elemental breakdown:

| | |
|---|---|
| Platinum | 40.2% |
| Carbon | 54.4% |
| Hydrogen | 5.4% |

The engine was run under steady conditions for about ninety (90) minutes per run at about 1300 rpm and was loaded to about 79 ft. 1b. torque (107 Nm) by a dynamometer to develop, on an average, 19.6 horsepower (14.6 kW) throughout each run.

During each of these runs, the time the engine took to consume a measured 900-milliliter quantity of gasoline with and without the platinum compound was recorded. For each run, such time readings were taken on three occasions and the time averaged. The product of the horsepower and average time (in minutes) to use 900 milliliters of fuel gave numbers representing work. The results are summarized below in Table 1B.

TABLE 1B

| Baseline Run | Work | Run with Additive | Work |
|---|---|---|---|
| 1 | 176.4 | 1 | 186.2 |
| 2 | 178.3 | 2 | 182.7 |
| 3 | 176.1 | 3 | 184.1 |
| 4 | 175.8 | 4 | 181.5 |
| 5 | 179.2 | 5 | 184.0 |
| 6 | 178.8 | 6 | 189.5 |
| 7 | 180.0 | 7 | 184.3 |
| 8 | 177.1 | 8 | 183.0 |
| 9 | 180.5 | 9 | 183.3 |
| 10 | 178.8 | 10 | 182.4 |
| 11 | 179.7 | 11 | 183.5 |
| 12 | 182.7 | | |
| 13 | 181.8 | | |

The consumption times for 900 milliliters of gasoline containing 0.1 ppm of platinum supplied by the platinum compound were generally longer than the consumption times without the platinum compound. The average time with the platinum compound was 9.39 minutes, and without was 9.11 minutes. This improvement of fuel consumption due to the platinum compound was 3.1%. Fuel flow measurements showed a range of fuel efficiency gains of three percent (3%) to six percent (6%) with the platinum-based additive compared to the fuel additive formulation minus the platinum-based compound in a series of similar tests.

Example 2

The procedure of Example 1 was repeated, but this time employing 5% ethanol in addition to the fuel additive of Example 1 (at 0.2 ppm of platinum w/v). Baseline data was collected for 2 days and test data was noted on 12 days after an initial five days of operation employing the additive. The test engine was run at three rpm's (1300, 1800 and 2100) in sequence on each test day, all at a torque of 55 1b. ft. (74.8 Nm). The data collected for fuel flow and hydrocarbon and carbon monoxide emissions are summarized below in Table 2.

Table 2

| | Fuel Flow (ml/sec) | | Hydrocarbons (ppm w/v) | | Carbon Monoxide (%) | |
|---|---|---|---|---|---|---|
| RPM | Baseline | With Additive | Baseline | With Additive | Baseline | With Additive |
| 1300 | 1.12 | 1.07 | 210 | 135 | 1.79 | 0.62 |
| 1800 | 1.82 | 1.76 | 169 | 113 | 1.05 | 0.40 |
| 2100 | 2.20 | 2.15 | 120 | 73 | 0.53 | 0.17 |

Example 3

Additive testing was performed with a Buick engine having the specifications described in Example 1, mounted on a Superflow SF-901 water brake dynamometer. Superflow data collection capabilities included automatic measuring and recording of rpm torque, horsepower, as well as various temperatures, pressures, and flow rates.

Two of the engines spark plugs were fitted with Kistler spark plug pressure adapters (Model 640) and Kistler high impedance pressure transducers (Model 6001). An A.V.L. optical shaft encoder was mounted on the test engine which generated signals for bottom dead center and every half degree of crank angle.

Pressure and crank angle data were collected, stored and processed by a Columbia computer (Model 4220). Individual samples consisted of two pressure measurements for every half degree of shaft rotation over eighty firing cycles.

Each additive set forth in Table 3 below was tested in the following manner. A baseline test was performed without fuel treatment, followed by a test in which additive was present in the fuel, and finally the baseline test was repeated. Two pressure samples were collected during each test run. Tests were twelve and one half minutes in duration, with 20 minutes run time between tests to allow for conditioning or purging. The test engine was run at 2100 rpm and 55 lb.ft. (78.8 Nm) of torque. Superflow data collection was sampled at ten second intervals. Standard deviation of horsepower was produced after each test in order to confirm engine stability and repeatability. Typical standard deviations averaged .06, for twelve and one half minutes of test engine run time.

The base fuel in each of the formulations tested was AMOCO unleaded regular gasoline having an octane rating of 87. In each case where ethanol (ETOH) or tetrahydrofuron (THF) was employed, its concentration was 0.25%. The DIBENZYL PT(II) referred to in the table was dibenzyl cyclooctadiene platinum II as prepared in Example 1; and, the NITROBENZYL PT(II) was similarly prepared but having nitrobenzyl in place of the two benzyl groups shown in the formula set forth in Example 1. Each of these platinum compounds, when employed, was used at a level sufficient to provide 0.15 ppm platinum, except where noted as being otherwise, e.g., c = 0.1, c = 0.2, or c = 0.3 ppm. The notation (ALL) indicates that this table summarizes data at all ethanol levels,

For each test run which consisted of a baseline-additive-baseline sequence, the pressure measurements were plotted automatically as described above.

For each plot obtained, three parameters were studied:

1. Peak - The maximum pressure achieved in the cylinder during combustion.

2. Distance - A physical measurement of the horizontal distance between the top dead center axis and the peak of the pressure curve. Shorter distances between top dead center and peak pressure achieved indicate faster propagation of the flame front across the cylinder.
3. MIP - The mean indicated pressure is the average pressure achieved after ignition at top dead center and is an indication of the total work release achieved by combusting the fuel.

In evaluating pressure curves with additive increases in peak pressure and MIP and decreases (shorter) distances were interpreted as a beneficial effect produced by the additive in terms of fuel utilization and useful work derived from combusting the fuel.

The nature of the effect of an additive treatment to fuel was studied by using the Analysis of Variance model otherwise known as (ANOVA). The assumptions that were made for this model have the following features:

1. There are two factor levels under study; baseline and treated conditions.
2. For each factor, the probability distribution of the data is normal.
3. All probability distributions of the factors have constant variance.
4. The mean for the data at each factor level may differ, reflecting the various effects of the treatment.

A statistical test can be performed to determine whether the means of the two factors are equal. If they are not, then further analysis is required. This analysis involves the construction of an interval estimation of the mean response for a given factor, and comparison of mean responses for different factors. Statistical inferences can be made by using the interval estimation, i.e., it can be estimated with 80 or 90 percent confidence that the mean increase of the peak, dist or MIP are between the lower limit and the upper limit of the interval constructed. The interval estimation depends on the confidence level, the total number of points in the data as well as the variance of the difference of the two means. Thus conclusions can be made about the effect of the fuel treatment compared to nontreatment.

**Table 3**

| Confidence Level | | Lower Limit | Upper Limit |
|---|---|---|---|
| | | ETOH vs BLANK | |
| 80% | Peak | 0.75% | 2.40% |
| | Dist | -0.39% | 0.03% |
| | MIP | -0.43% | 0.17% |
| 90% | Peak | 0.42% | 2.72% |
| | Dist | -0.47% | 0.12% |
| | MIP | -0.55% | 0.29% |

| Confidence Level | | Lower Limit | Upper Limit |
|---|---|---|---|
| **DIBENZYL PT(II) vs BLANK** | | | |
| 80% | Peak | -0.11% | 1.05% |
| | Dist | 0.10% | 0.58% |
| | MIP | -1.23% | 0.64% |
| 90% | Peak | -0.34% | 1.27% |
| | Dist | 0.01% | 0.67% |
| | MIP | -1.59% | 1.01% |
| **ETOH+DIBENZYL PT(II) vs BLANK** | | | |
| 80% | Peak | 3.50% | 6.34% |
| | Dist | -0.93% | 0.39% |
| | MIP | -0.22% | 0.45% |
| 90% | Peak | 2.94% | 6.89% |
| | Dist | -1.19% | 0.64% |
| | MIP | -0.35% | 0.59% |
| **THF vs BLANK** | | | |
| 80% | Peak | 0.13% | 1.05% |
| | Dist | -0.29% | 0.11% |
| | MIP | -1.29% | -0.69% |
| 90% | Peak | -0.05% | 1.23% |
| | Dist | -0.36% | 0.19% |
| | MIP | -1.41% | -0.57% |
| **NITROBENZYL PT(II) vs BLANK** | | | |
| 80% | Peak | -0.96% | 0.76% |
| | Dist | -0.39% | 0.28% |
| | MIP | -1.21% | -0.52% |
| 90% | Peak | -1.30% | 1.09% |
| | Dist | -0.53% | 0.41% |
| | MIP | -1.34% | -0.39% |
| **NITROBENZYL PT(II)+THF vs BLANK** | | | |
| 80% | Peak | 1.09% | 1.99% |
| | Dist | -0.83% | -0.05% |
| | MIP | -0.91% | 0.36% |
| 90% | Peak | 0.92% | 2.16% |
| | Dist | -0.98% | 0.10% |
| | MIP | -1.16% | 0.60% |

| Confidence Level | | Lower Limit | Upper Limit |
|---|---|---|---|
| | **ETOH+DIBENZYL PT(II) vs ETOH (c=0.1)** | | |
| 80% | Peak | -3.22% | 3.69% |
| | Dist | -1.12% | 0.98% |
| | MIP | -1.15% | 1.17% |
| 90% | Peak | -5.11% | 5.59% |
| | Dist | -1.69% | 1.56% |
| | MIP | -1.78% | 1.80% |
| | **ETOH+DIBENZYL PT(II) vs ETOH (c=0.2)** | | |
| 80% | Peak | -2.54% | 4.45% |
| | Dist | -1.51% | 0.53% |
| | MIP | -0.40% | 0.10% |
| 90% | Peak | -4.46% | 6.36% |
| | Dist | -2.07% | 1.09% |
| | MIP | -0.54% | 0.24% |
| | **ETOH+DIBENZYL PT(II) vs ETOH (c=0.3)** | | |
| 80% | Peak | -2.49% | 4.22% |
| | Dist | -1.51% | 0.67% |
| | MIP | -0.23% | 0.62% |
| 90% | Peak | -4.33% | 6.05% |
| | Dist | -2.10% | 1.26% |
| | MIP | -0.47% | 0.86% |
| | **ETOH+DIBENZYL PT(II) vs ETOH (ALL)** | | |
| 80% | Peak | 0.56% | 1.81% |
| | Dist | -0.47% | -0.04% |
| | MIP | 0.12% | 0.72% |
| 90% | Peak | 0.36% | 2.01% |
| | Dist | -0.54% | 0.03% |
| | MIP | 0.03% | 0.81% |

Example 4

This example evaluates the performance of a diesel fuel additive according to the invention in reducing light duty diesel emissions and improving fuel economy. The fuel additive had the formulation set forth in Table 4A:

Table 4A

| Ingredient | Parts by Weight |
|---|---|
| Diphenyl Cyclooctadiene Platinum II Coordination Compound | 0.0170 |
| Ethyl Dii-3 Octyl Nitrate | 28.4 |
| Ethyl EDA-2 Detergent | 3.5 |
| Xylene | 2.6 |
| Exxon LOPS Mineral Spirits | 65.5 |

Test Methodology

A 1984 Volvo GLE 760 diesel with five speed transmission and approximately 30,000 miles (48,300 km) was selected as a test vehicle to provide data on a newer, but well broken-in, diesel engine.

The vehicle was driven to Scott Environmental Laboratories in Plumsteadville, Pennsylvania and allowed to stabilize for twelve hours prior to chassis dynamometer testing.

Baseline testing was conducted according to U.S. EPA Federal Test Procedures (urban cycle) and Highway Fuel Economy Test procedures. These procedures call for the dynamometer to be loaded to a prescribed setting and the vehicle to be driven through a series of acceleration, shifting, braking and stopping patterns as emissions and fuel economy data are collected. Data are collected over a series of runs and analyzed through a computer software program to arrive at a composite number for emissions and fuel economy performance.

Following baseline testing, the vehicle was treated with additive at the rate of seven ounces per twenty gallons of fuel and released to accumulate on-the-road mileage. The vehicle accumulated 1,600 miles (2,576 km) before it was retested. Treatment was maintained during mileage accumulation through the use of pre-packaged additive introduced into the vehicle's fuel tank at each fuel fill-up to give an average concentration of platinum of about 0.15 ppm. Treated fuel testing followed the same procedures as those for baseline testing.

The data is summarized in Table 4B.

Table 4B

Federal Emission Test Data

| | Baseline | Treated | % Increase | % Decrease |
|---|---|---|---|---|
| $CO_2$ | 343.44 | 303.98 | | 11.49 |
| HC | 0.14 | 0.17 | 21.43 | |
| CO | 0.83 | 0.34 | | 59.04 |
| $NO_x$ | 1.00 | 0.48 | | 52.00 |
| Part | 0.32 | 0.30 | | 6.25 |
| MPG | 25.69 | 29.07 | 13.16 | |

Highway Fuel Economy Test Data

| | Baseline | Treated | % Increase | % Decrease |
|---|---|---|---|---|
| $CO_2$ | 231.88 | 199.55 | | 13.94 |
| HC | 0.09 | 0.04 | | 55.56 |
| CO | 0.53 | 0.46 | | 13.21 |
| $NO_x$ | 0.61 | 0.33 | | 45.90 |
| Part | -- | -- | | -- |
| MPG | 43.68 | 50.78 | 16.25 | |

Example 5

Two diesel passenger automobiles (a Peugeot and a Volkswagen Dasher) were fitted with on-board computers to record trip data and road tested over a 200-mile highway route. In these demonstrations, route and load were held relatively constant, measuring fuel consumption with and without the additive of the invention. The road tests accumulated data for over 7,000 miles (11,270 km) driven with untreated fuel and 6,400 miles (10,304km) for fuel treated with the additive detailed in Table 4A to give a platinum metal content of 0.15 ppm. From plots of the regression curves (mpg versus mph) a numerical integration was performed to determine the area under baseline and treated curves. The difference between the two areas was calculated in order to arrive at a percentage figure to describe the increase in mileage due to treatment with the fuel additive. The results are summarized in Table 5.

Table 5

| | | |
|---|---|---|
| Peugeot | Linear Regression | 6.55% increase |
| | Quadratic Regression | 8.49% increase |
| VW-Dasher | Linear Regression | 6.16% increase |
| | Quadratic Regression | 6.78% increase |

Example 6

Trials were conducted over a three-day period to evaluate the performance of the additive detailed in Table 4A in a Ruston GAPC medium speed diesel engine under closely controlled laboratory conditions. The engine was operated at a constant speed of 750 rpm within a power range of 35 to 85% of maximum continuous rating (MCR).

Baseline fuel tests were performed on the first day, prior to additive introduction on the first and second days. On the first day, baseline fuel flow readings were recorded at power ratios of 35%, 50%, 62.5%, 75% and 85% MCR. Subsequently, additive was introduced in the ratio of one part additive to 250 parts fuel and the power reduced through the above range at hourly intervals. Fuel consumption was recorded at five-minute intervals. At the end of the day's testing, the engine was shut down with additive remaining in the fuel system. The engine had no preconditioning or "seasoning" time on additive.

On the second say the engine was warmed up and testing began using additive in a concentration of

one part to 400. Engine power was progressively increased at hourly intervals through the same points as on the first day, with fuel consumption again recorded at five-minute intervals. An additional baseline (untreated fuel) test was run on the third day.

Analysis of the data collected on the first day presented in Table 6A indicate a reduction in fuel consumption of 3.1% to 5.3% when using the additive. Treated data acquisition progressed from high load (420 kw) to low load (220 kw). Absolute reduction in fuel consumption is noted to improve from no reduction initially (first treated data point) to a 5.3% reduction at the end of the sequence.

Data presented in Table 6B represent a comparison of treated data collected on the second day versus the baseline data of the first day. Percentage reduction in fuel consumption ranged from 3.3% to 4.0% when using the additive. Absolute reduction in fuel consumption is noted to improve from 2.4 kg/hr to 3.3 kg/hr, which follows the trend towards increased time of treatment during the progression from low load operation (275 kw) to high load operation (475 kw) on the second day.

Data collected on the third day (not shown) for untreated operation appear identical to those for treated operation the second day. This is probably the result of a residual effect of additive deposited on cylinder parts and lube oil components during treatment.

Table 6A

Comparison of Baseline Fuel Consumption vs. Treated Fuel Consumption at Indicated Loads (First Day Data)

| Power (kw) | Treated Fuel Consumption (kg/hr) | Untreated Fuel Consumption (kg/hr) | Reduction in Fuel Consumption with Additive (kg/hr) | Reduction % |
|---|---|---|---|---|
| 420 | 86.8 | 86.8 | -- | -- |
| 345 | 71.5 | 73.8 | 2.3 | 3.1 |
| 280 | 58.7 | 61.3 | 2.6 | 4.2 |
| 220 | 46.5 | 49.1 | 2.6 | 5.3 |

Table 6B

Comparison of Baseline Fuel Consumption vs. Treated Fuel Consumption at Indicated Loads (Second Day Data)

| Power (kw) | Treated Fuel Consumption (kg/hr) | Untreated Fuel Consumption (kg/hr) | Reduction in Fuel Consumption with Additive (kg/hr) | Reduction % |
|---|---|---|---|---|
| 275 | 57.6 | 60.0 | 2.4 | 4.0 |
| 347 | 71.2 | 74.2 | 3.0 | 4.0 |
| 410 | 84.0 | 87.1 | 3.1 | 3.6 |
| 475 | 95.9 | 99.2 | 3.3 | 3.3 |

Example 7

This test evaluates the effect of the additive detailed in Table 4A on the fuel economy and horsepower output of a commercially-operated, diesel-powered truck tractor.

On the first day of testing, baseline (no additive) chassis dynamometer tests were conducted. The vehicle tested was a tandem tractor powered by a Cummins NHC-250 engine. The vehicle was supplied by an independent owner-operator and was normally used in highway construction hauling. The engine had accumulated 8,000 miles (12,800 km) since rebuild. Following baseline testing and treatment at a rate of one gallon of additive to four hundred gallons of fuel, the vehicle was released to accumulate approximately 1000 miles (1610 km) of over-the-road treated data before being retested on the chassis dynamometer.

During over-the-road mileage accumulation, treatment was maintained by the driver according to a treatment schedule which provided for a 1:400 dosage rate. Product was supplied in one-gallon (3.785 1) containers along with a graduated beaker for accurate measurement. Daily record sheets were completed by the driver to record miles driven and fuel and additive consumed.

During dynamometer testing, the tractor was secured to a Clayton water-brake dynamometer and run for four minute intervals at settings of 2100 rpm and full power, 2000 rpm and full power and 1900 rpm and full power. Readings were taken every minute from the dynamometer's gauges, recording the actual rear wheel horsepower. A separate tachometer was installed in the cab. The one in the tractor was found to "bounce". The speed and horsepower balance were maintained at the rear wheels from the cab. Simultaneously, fuel measurements were taken at the same intervals. A thirty gallon drum (113.55 1) of fuel was placed on an accurate digital scale and the reduction in the weight of the fuel was recorded. Recirculation was returned to the drum to measure only that fuel consumed. The combined rear wheel horsepower was found to be equal to factory specifications,i.e. 70% of rated 250 horsepower (186.5 kW), equal to 175 hp (130.55 kW). Prior to testing the engine was checked by the manufacturer to be sure that the fuel flow and fuel pressure agreed with the manufacturer's specifications for the fuel pump.

Two test runs were conducted on each test date to assure the repeatability of results. Each test consisted of three minutes of stabilized run time at each of the three rpm settings with one minute in between to allow for stabilization and transition to the next rpm level.

The averages of three readings for each rpm setting are summarized in Table 7A for untreated and treated data. Table 7A provides a comparison of horsepower (output) versus fuel flow (input) at a given engine rpm for untreated and treated data. Horsepower increases following additive treatment averaged 2.6% to 5.2% improvement over baseline.

Table 7B provides a comparison of actual horsepower increase using the additive versus untreated data. Actual horsepower increases ranged from 4.5 hp (3.36 kW) to 9.0 hp (6.72 kW) following additive treatment.

Table 7A
Horsepower and Fuel Flow Data
at Indicated RPM

| | UNTREATED | | | TREATED | | |
|---|---|---|---|---|---|---|
| | RUN 1 | RUN 2 | AVG | RUN 1 | RUN 2 | AVG |
| (2100 rpm) hp (kW) | 170 (127) | 174 (130) | 172 (128) | 181 (135) | 181 (135) | 181 (135) |
| Fuel Flow (lb/m) (kg/m) | 1.6 (0.73) | 1.6 (0.73) | 1.6 (0.73) | 1.6 (0.73) | 1.6 (0.73) | 1.6 (0.73) |
| (2000 rpm) hp (kW) | 172 (128) | 173 (129) | 172.5 (128.7) | 180 (134) | 180 (134) | 180 (134) |
| Fuel Flow (lb/m) (kg/m) | 1.5 (0.68) | 1.6 (0.73) | 1.55 (0.70) | 1.5 (0.68) | 1.6 (0.73) | 1.55 (0.70) |
| (1900 rpm) hp (kW) | 173 (129) | 173 (129) | 173 (129) | 177 (132) | 178 (133) | 177.5 (132.4) |
| Fuel Flow (lb/m) (kg/m) | 1.5 (0.68) | 1.5 (0.68) | 1.5 (0.68) | 1.5 (0.68) | 1.5 (0.68) | 1.5 (0.68) |

Table 7B

Actual HP Improvement Resulting from Additive Treatment

| RPM | Untreated (2 run avg) | Treated (2 run avg) | HP Change |
|---|---|---|---|
| 2100 | 172 (128kW) | 181 (135kW) | 9.0 (6.7kW) |
| 2000 | 172.5(128.7kW) | 180 (134kW) | 7.5 (5.6kW) |
| 1900 | 173 (129kW) | 177.5 (132.4kW) | 4.5 (3.4kW) |
| | Average HP Improvement: | | 7.0 (5.2kW) |

Fuel flow remained nearly constant during the tests, while actual horsepower measured by the dynamometer increased for the treated runs. Actual horsepower improvement averaged 7.0 hp (5.2 kW) for the treated runs over the three rpm settings. This corresponds to a 4.0% increase in horsepower over baseline horsepower.

The dynamometer was not equipped to run treated tests at equivalent baseline horsepower in order to monitor decrease in fuel flow; however, a calculation of brake specific fuel consumption (BSFC) is one means of recording the fact that more work is produced per unit of fuel when using the additive. Therefore, if power requirements were held constant, less fuel would be consumed when using the additive. The data provided in Table 7C represent BSFC, pounds of fuel consumed per horsepower-hour for untreated and treated data. The improvement using additive ranged from 2.5% to 5.0%.

Emissions measurements were not quantified during these tests; however, a reduction in visible smoke emissions was observed when running on treated fuel at start-up, idle and loaded conditions.

Table 7C

Brake Specific Fuel Consumption vs. RPM

(BSFC in lb per. hp-hr) (kg per kW-hr)

| | ----UNTREATED---- | | | -----TREATED----- | | | |
|---|---|---|---|---|---|---|---|
| RPM | Run 1 | Run 2 | Avg | Run 1 | Run 2 | Avg | Improvement |
| 2100 | 0.564 (0.343) | 0.551 (0.335) | 0.558 (0.340) | 0.530 (0.323) | 0.530 (0.323) | 0.530 (0.323) | 5.0% |
| 2000 | 0.523 (0.318) | 0.554 (0.337) | 0.539 (0.328) | 0.500 (0.304) | 0.533 (0.324) | 0.517 (0.315) | 4.1% |
| 1900 | 0.520 (0.316) | 0.520 (0.316) | 0.520 (0.316) | 0.508 (0.309) | 0.505 (0.307) | 0.507 (0.308) | 2.5% |

Example 8

This test evaluates the effectiveness of the diesel fuel additive set forth in Table 4A in a high elevation test on large tractors presently used for hauling. Two tractors were selected -- a new Kenworth with a 400 horsepower (298 kw) Caterpillar engine (31,000 (49,910 km) total miles) and a Kenworth with a 475 hp (354 kW) Cummins twin-turbo engine (172,000 total miles, 276,920 km).

Testing Method (Over-the-Road)

Baseline data from previous months' records was listed indicating date, miles driven, gallons of fuel used and then miles per gallon was calculated. The two selected vehicles were then tested on a chassis dynamometer for baseline determination (see Testing Method-Chassis Dynamometer). After the dynamometer tests, the tractors were treated with the fuel additive and returned to their commercial routes. The next two months (treated data) were then listed and compared to the original (untreated) baseline data.

Testing Method (Chassis Dynamometer)

Both Kenworth tractors were tested on an Ostradyne Model U130TT chassis dynamometer. The specifications of the unit are horsepower limit 500 (373 kW), torque limit 1500 lb. ft. (2034 Nm), maximum rear wheel speed was 60 mph (96.6 km.p.h.).

The tractors were driven onto the dynamometer such that the rear driving wheels of the tractor turned a set of rollers. These rollers are connected to a braking system. The force required on the turning rollers to load the tractor's rear driving wheels is indicated on various meters located on the dynamometer's control panel. The meters consisted of horsepower, torque, speed (calibrated in miles per hour) and also a separate panel with controls to adjust for barometric pressure, humidity, etc.

The test consisted of selecting three basic rpm's in the upper scale of the tractor's capability. The tractor was then fully loaded maintaining the specific rpm and the meters on the dynamometer were recorded every minute for 5 minutes.

Fuel flow was measured by filling a 20 gallon (75.72 1) pail with diesel fuel from the tractor's saddle tanks. The 20 gallon (75.721) pail was placed on an accurate electronic scale. During the 5 minute load tests, minute readings were taken from the scale so an accurate accounting of the fuel usage in pounds of fuel per minute was recorded.

Data Evaluation (Over-the-Road)

The over-the-road data for both tractors is summarized in Tables 8A and 8B. Both tractors showed improvements in excess of 5.6+% in MPG while under treatment; with a discernable trend towards continued improvement with time under treatment.

Table 8A

Kenworth-Caterpillar

| Baseline | | Treated | |
|---|---|---|---|
| Day | MPG (km/l) | Day | MPG (km/l) |
| 1 | 4.13 (1.755) | 1 | 4.60 (1.955) |
| 2 | 4.15 (1.764) | 2. | 4.63 (1.968) |
| 3 | 4.11 (1.746) | 3 | 4.86 (2.066) |
| 4 | 4.20 (1.785) | 4 | 4.67 (1.985) |
| 5 | 3.84 (1.632) | 5 | 4.95 (2.104) |
| 6 | 4.74 (2.015) | 6 | 5.02 (2.134) |
| 7 | 4.15 (1.764) | | |
| 8 | 4.19 (1.781) | | |
| N: | 8.00 | N: | 6.00 |
| AVG: | 4.189(1.78) | AVG: | 4.788(2.035) |
| STD: | 0.23 | STD: | 0.16 |

Improvement with Treatment = 0.599 mpg (0.255 km/l) or 14.300%

Table 8B

| Baseline | | Treated | |
|---|---|---|---|
| Day | MPG (km/l) | Day | MPG (km/l) |
| 1 | 4.65 (1.976) | 1 | 4.87 (2.070) |
| 2 | 4.43 (1.883) | 2 | 4.64 (1.972) |
| 3 | 4.75 (2.019) | 3 | 4.87 (2.070) |
| | | 4 | 5.20 (2.210) |
| N: | 3.00 | N: | 4.00 |
| AVG: | 4.610 (1.960) | AVG: | 4.895 (2.080) |
| STD: | 0.134 | STD: | 0.200 |

Improvement with Treatment = 0.285 mpg (0.121 km/l) or 6.18%

The above description is for the purpose of teaching the person of ordinary skill in the art how to practice the present invention and is not intended to detail all those obvious modifications and variations of it which will become apparent to the skilled worker upon reading the description. It is intended, however, that all such obvious modifications and variations be included within the scope of the present invention as defined herein.

**Claims**

1. A fuel composition for internal combustion or diesel engines comprising a gasoline or diesel fuel containing, as an efficiency promoter and/or as an agent to reduce noxious exhaust gas emissions, particularly carbon monoxide and nitrogen oxide emissions, a small amount of an organo-metallic complex of a platinum group metal, said complex being soluble in said fuel, characterised in that the organo-metallic complex is a platinum group metal coordination compound comprising a platinum group metal having a +2 or +4 coordination state with at least one coordination site in the compound being occupied by an organic coordinating group containing at least one unsaturated carbon-to-carbon bond with an olefinic, acetylenic or aromatic pibond configuration, said compound being present in an amount sufficient to provide a platinum group metal concentration of from 0.01 to 1.0 ppm relative to said fuel on a weight:volume basis.

2. A fuel composition according to claim 1, characterised in that the concentration of the platinum group metal is from 0.05 to 0.5 ppm relative to said fuel on a weight:volume basis.

3. A fuel composition according to claim 2, characterised in that said platinum group metal concentration is from 0.1 to 0.3 ppm.

4. A fuel composition according to any one of claims 1 to 3, characterised in that the organo-metallic complex is a coordination compound of a platinum group metal having a coordination state of +2.

5. A fuel composition according to claim 4, characterised in that the organo-metallic complex is a coordination compound of the formula:

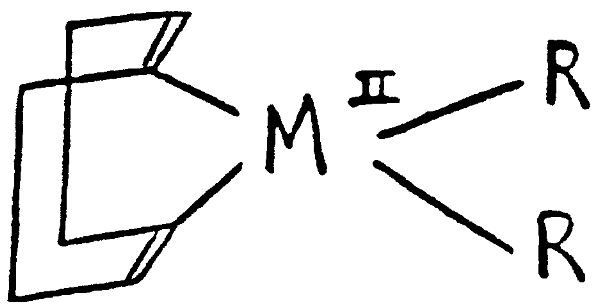

where $M^{11}$ is the platinum group metal with a coordination of +2; and the R groups are phenyl, nitrophenyl or benzyl.

6. A fuel composition according to claim 5, characterised in that in said formula M is platinum and the R groups are benzyl groups.

7. A fuel composition according to any one of claims 1 to 6, characterised in that the composition additionally contains up to 5% by weight of a solvent for said platinum group metal compound, said solvent being miscible with said fuel.

8. A fuel composition according to claim 7, characterised in that the solvent is present in an amount of from 2.25 to 2.5% by weight.

9. A fuel composition according to claim 7 or 8, characterised in that the fuel miscible solvent is an oxygenated hydrocarbon.

10. A fuel composition according to claim 9, characterised in that the solvent and the platinum group metal compound provide an oxygen:metal weight ratio of from 1,000:1 to 100,000:1.

11. A fuel composition according to claim 10, characterised in that said oxygen:metal weight ratio is from 5,000:1 to 35,000:1.

12. A fuel composition according to claim 9, 10 or 11, characterised in that the oxygenated hydrocarbon

solvent is an ether, a heterocyclic ether or an alcohol.

**13.** A fuel composition according to claim 12, characterised in that the solvent is ethanol, tetrahydrofuran or methyl t -butyl ether.

**14.** A fuel composition according to claim 7 or 8, characterised in that the fuel component is a diesel fuel, and the solvent is octyl nitrate.

**15.** An additive composition for addition to internal combustion engine and diesel engine fuels in amounts sufficient to provide from 0.1 to 1.0 ppm of platinum group metal on a weight:volume basis relative to said fuel thereby to improve the efficiency thereof and/or to reduce noxious gas emissions from such engines, said additive comprising a solution of a fuel-soluble, platinum group metal coordination compound comprising a platinum group metal having a +2 or +4 coordination state with at least one coordination site in the compound being occupied by an organic coordinating group containing at least one unsaturated carbon-to-carbon bond with an olefinic, acetylenic or aromatic pi-bond configuration in an oxygenated, fuel miscible hydrocarbon solvent or octylnitrate and in an amount sufficient to provide, in said additive composition, an oxygen to platinum group metal ratio of from 1,000:1 to 100,000:1.

**16.** An additive composition according to claim 15, characterised in that said solvent provides an oxygen to platinum group metal weight ratio in the additive composition of from 5,000:1 to 35,000:1.

**17.** An additive composition according to claim 15 or 16, when packaged for addition to said fuel in an amount of u to 5% by weight thereby to provide said amount of platinum group metal in said fuel.

**18.** An additive composition according to claim 15, 16 or 17, characterised in that the platinum group metal compound is a compound as defined in any one of claims 4 to 6.

**19.** An additive composition according to any one of claims 15 to 18, characterised in that said solvent is an oxygenated fuel miscible hydrocarbon.

**20.** An additive composition according to claim 19, characterised in that the solvent is an ether or alcohol.

**21.** An additive composition according to claim 20, characterised in that the solvent is ethanol, tetrahydrofuran or methyl t -butyl ether.

**22.** An additive composition according to any one of claims 15 to 18, specifically for addition to diesel fuels, characterised in that the solvent is octylnitrate.

**23.** A method of improving the efficiency and/or reducing the noxious gas emissions of internal combustion engines or diesel engines, which comprises adding a fuel-soluble organo-metallic complex of a platinum group metal to the fuel used to run the engine, characterised in that the organo-metallic complex is a platinum group metal coordination compound comprising a platinum group metal having a +2 or +4 coordination state with at least one coordination site in the compound being occupied by an organic coordinating group containing at least one unsaturated carbon-to-carbon bond with an olefinic, acetylenic or aromatic pi-bond configuration, and in that the platinum group metal compound is added in an amount sufficient to provide a platinum group metal concentration of from 0.01 to 1.0 ppm on a weight:volume basis.

**24.** A method according to claim 23, characterised in that the platinum group metal compound is added in an amount sufficient to provide a platinum group metal concentration of from 0.05 to 0.5 ppm on the same basis.

**25.** A method according to claim 23, characterised in that said concentration is from 0.1 to 0.3 ppm.

**26.** A method according to claim 22, 23 or 24, characterised in that the platinum group metal compound is as defined in claim 4, 5 or 6.

**27.** A method according to any one of claim 23 to 26, characterised in that -the platinum group metal

compound is added to the fuel in admixture with up to 5% by weight, based on the weight of the fuel of an organic solvent for the compound and which is miscible with the fuel.

**28.** A method according to claim 27, characterised in that the solvent is added in an amount of from 0.25 to 2.5% by weight, based on the weight of the fuel.

**29.** A method according to claim 27 or 28, as applied to a diesel engine, and wherein said platinum group metal compound is added to the fuel in admixture with octyl nitrate.

**30.** A method according to any one of claims 23 to 28, wherein the solvent is an oxygenated hydrocarbon which provides an oxygen:platinum group metal weight ratio in said fuel of from 1,000:1 to 100,000:1.

**31.** A method according to claim 30, characterised in that said ratio is from 5,000:1 to 35,000:1.

**32.** A method according to claim 30 or 31, characterised in that the oxygenated hydrocarbon solvent is an ether, a heterocyclic ether or an alcohol.

**33.** A method according to claim 30 or 31, wherein the solvent is ethanol, tetrahydrofuran or methyl t -butyl ether.

## Revendications

**1.** Une composition de carburant pour moteurs à combustion interne ou diesel comprenant un carburant essence ou diesel contenant, en tant que promoteur de rendement et/ou en tant qu'agent pour réduire les émissions de gaz d'échappement nocifs, particulièrement les émissions de monoxyde de carbone ou d'oxydes d'azote, une petite quantité d'un complexe organo-métallique d'un métal du groupe du platine, ledit complexe étant soluble dans ledit carburant, caractérisée en ce que le complexe organo-métallique est un composé coordonné d'un métal du groupe du platine comprenant un métal du groupe du platine ayant un état de coordination de +2 ou +4 avec au moins une position de coordination dans le composé qui est occupée par un groupe de coordination organique contenant au moins une liaison carbone-carbone insaturée avec une configuration de liaison pi oléfinique, acétylénique ou aromatique, ledit composé étant présent en une quantité suffisante pour procurer une concentration du métal du groupe du platine allant de 0,01 à 1,0 ppm (partie par million) par rapport au dit carburant sur une base poids/volume.

**2.** Une composition de carburant selon la revendication 1, caractérisée en ce que la concentration du métal du groupe du platine est de 0,05 à 0,5 ppm par rapport au dit carburant sur une base poids/volume.

**3.** Une composition de carburant selon la revendication 2, caractérisée en ce que ladite concentration de métal du groupe du platine est de 0,1 à 0,3 ppm.

**4.** Une composition de carburant selon l'une quelconque des revendications 1 à 3, caractérisée en ce que le complexe organo-métallique est un composé coordonné d'un métal du groupe du platine ayant un état de coordination de +2.

**5.** Une composition de carburant selon la revendication 4, caractérisée en ce que le complexe organo-métallique est un composé coordonne de la formule :

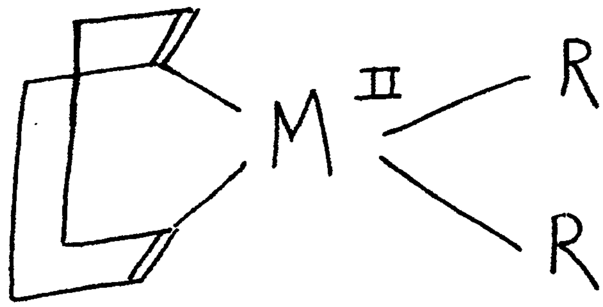

dans laquelle $M_{II}$ est le métal du groupe du platine avec une coordination de +2; et les groupes R sont des phényles des nitrophényles ou des benzyles.

6. Une composition de carburant selon la revendication 5, caractérisée en ce que dans ladite formule M est du platine et les groupes R sont des groupes benzyles.

7. Une composition de carburant selon l'une quelconque des revendications 1 à 6, caractérisée en ce que la composition contient de manière additionnelle jusqu'à 5 % en poids d'un solvant pour le composé de métal du groupe du platine, ledit solvant étant miscible avec ledit carburant.

8. Une composition de carburant selon la revendication 7, caractérisée en ce que ledit solvant est présent dans une quantité allant de 2,25 à 2, 5 % en poids.

9. Une composition de carburant selon la revendication 7 ou 8, caractérisée en ce que dans le solvant miscible au carburant se trouve un hydrocarbure oxygéné.

10. Une composition de carburant selon la revendication 9, caractérisée en ce que le solvant et le composé de métal du groupe du platine procurent un ratio en poids d'oxygène/métal allant de 1.000/1 à 100.000/1.

11. Une composition de carburant selon la revendication 10, caractérisée en ce que ledit ratio en poids d'oxygéne/métal est de 5.000/1 à 35.000/1.

12. Une composition de carburant selon la revendication 9, 10 ou 11, caractérisée en ce que le solvant hydrocarbure oxygéné est un éther hétérocyclique ou un alcool.

13. Une composition de carburant selon la revendication 12, caractérisée en ce que le solvant est un éthanol, un tétrahydrofurane ou un éther méthyle t -butyle.

14. Une composition de carburant selon la revendication 7 ou 8, caractérisée en ce que le composant carburant est un carburant diesel, et le solvant est un nitrate octylique.

15. Une composition additive pour addition à des carburants pour moteurs à combustion interne et moteurs diesel dans des quantités suffisantes pour procurer de 0,1 à 1,0 ppm d'un métal du groupe du platine sur une base poids/volume par rapport au dit carburant pour améliorer par ce moyen le rendement de celui-ci et/ou pour réduire les émissions de gaz nocifs de tels moteurs, ledit additif comprenant une solution, soluble dans le carburant, d'un composé coordonné d'un métal du groupe du platine comprenant un métal du groupe du platine ayant un état de coordination de +2 ou +4 avec au moins une position de coordination dans le composé qui est occupée par un groupe de coordination organique contenant au moins une liaison carbone-carbone insaturée avec une configuration de liaison pi oléfinique, acétylénique ou aromatique dans un solvant hydrocarbure ou nitrate octylique miscible au carburant, oxygéné, et en quantité suffisante pour procurer dans ladite composition additive, un ratio oxygène/métal du groupe du platine allant de 1.000/1 à 100.000/1.

16. Une composition additive selon la revendication 15, caractérisée en ce que ledit solvant procure un ratio oxygène sur métal du groupe du platine dans la composition additive allant de 5.000/1 à 35.000/1.

**17.** Une composition additive selon la revendication 15 ou 16, lorsqu'elle est conditionnée pour être ajoutée au dit carburant dans une proportion allant jusqu'à 5 % en poids pour procurer par ce moyen ladite quantité de métal du groupe du platine dans ledit carburant.

**18.** Une composition additive selon la revendication 15, 16 ou 17, caractérisée en ce que le composé de métal du groupe du platine est un composé tel que défini dans l'une quelconque des revendications 4 à 6.

**19.** Une composition additive selon l'une quelconque des revendications 15 à 18, caractérisée en ce que ledit solvant est un hydrocarbure oxygéné miscible au carburant.

**20.** Une composition additive selon la revendication 19, caractérisée en ce que le solvant est un éther ou un alcool.

**21.** Une composition additive selon la revendication 20, caractérisée en ce que le solvant est un éthanol, un tétrahydrofurane ou un éther méthyle t -butyle.

**22.** Une composition additive selon l'une quelconque des revendications 15 à 18, spéciale pour être ajoutée à des carburants diesel, caractérisée en ce que le solvant est un nitrate octylique.

**23.** Un procédé pour l'amélioration du rendement et/ou pour réduire les émissions de gaz nocifs de moteurs à combustion interne ou de moteurs diesel qui comprend l'addition, d'un complexe organo-métallique soluble dans le carburant d'un métal du groupe du platine, au carburant utilisé pour faire fonctionner le moteur, caractérisé en ce que le complexe organo-métallique est un composé coordonné d'un métal du groupe du platine comprenant un métal du groupe du platine ayant un état de coordination de +2 ou +4 avec au moins une position de coordination dans le composé qui est occupée par un groupe de coordination organique contenant au moins une liaison carbone-carbone insaturée avec une configuration de liaison pi oléfinique, acétylénique ou aromatique, et en ce que le composé de métal du groupe du platine est ajouté en une quantité suffisante pour procurer une concentration du métal du groupe du platine allant de 0,01 à 1,0 ppm sur une base poids/volume.

**24.** Un procédé selon la revendication 23, caractérisé en ce que le composé de métal du groupe du platine est ajouté en une quantité suffisante pour procurer une concentration du métal du groupe du platine allant de 0,05 à 0,5 ppm sur la même base.

**25.** Un procédé selon la revendication 23, caractérisé en ce que ladite concentration est de 0,1 à 0,3 ppm.

**26.** Un procédé selon la revendication 22, 23 ou 24, caractérisé en ce que le composé de métal du groupe du platine est tel qu'il est défini dans la revendication 4, 5 ou 6.

**27.** Un procédé selon l'une quelconque des revendications 23 à 26, caractérisé en ce que le composé de métal du groupe du platine est ajouté au carburant dans un adjuvant avec jusqu'à 5 % en poids, basé sur le poids du carburant, d'un solvant organique pour le composé et qui est miscible avec le carburant.

**28.** Un procédé selon la revendication 27, caractérisé en ce que le solvant est ajouté en une quantité allant de 0,25 à 2,5 % en poids, basé sur le poids du carburant.

**29.** Un procédé selon la revendication 27 ou 28, étant appliqué à un moteur diesel, et dans lequel ledit composé de métal du groupe du platine est ajouté au carburant dans un adjuvant avec un nitrate octylique.

**30.** Un procédé selon l'une quelconque des revendications 23 à 28, dans lequel le solvant est un hydrocarbure oxygéné qui procure un ratio d'oxgène/métal du groupe du platine dans ledit carburant allant de 1.000/1 à 100.000/1.

**31.** Un procédé selon la revendication 30, caractérisé en ce que ledit ratio est de 5.000/1 à 35.000/1.

32. Un procédé selon la revendication 30 ou 31, caractérisé en ce que le solvant hydrocarbure oxygéné est un éther, un éther hétérocyclique ou un alcool.

33. Un procédé selon la revendication 30 ou 31, dans lequel le solvant est de un éthanol, un tétrahydrofurane ou un éther méthyle t -butyle.

## Ansprüche

1. Brennstoffzusammensetzung für Verbrennungs- oder Dieselmotoren mit Benzin- oder Dieselkraftstoff, welcher als wirksamen Aktivator und/oder als Mittel zur Reduzierung schädlicher Verbrennungsgasemissionen, insbesondere Kohlenmonoxid und Stickoxidemissionen, einen kleinen Anteil eines organometallischen Komplexes aus einem Metall der Platingruppe enthält, wobei dieser Komplex in dem Brennstoff löslich ist, dadurch gekennzeichnet, daß der organo-metallische Komplex eine Koordinationsverbindung eines Metalls der Platingruppe ist mit einem Metall der Platingruppe, welches einen +2 oder +4 Koordinationszustand hat, wobei zumindest eine Koordinationsstelle in der Verbindung von der organischen Koordinationsgruppe besetzt ist, welche zumindest eine ungesättigte Kohlenstoff-Kohlenstoffbindung mit einer olefinischen, acetylenischen oder aromatischen pi-Bindungsstruktur hat, wobei die Verbindung in einer Menge vorhanden ist die ausreicht, um eine Konzentration des Metalls der Platingruppe im Bereich von 0,01 bis 1,0 ppm bereitzustellen, bezogen auf den Brennstoff auf der Basis Gewicht zu Volumen.

2. Brennstoffzusammensetzung nach Anspruch 1, dadurch gekennzeichnet, daß die Konzentration des Metalls der Platingruppe zwischen 0,05 bis 0,5 ppm relativ zu dem Brennstoff auf einer Gewicht-zu-Volumen-Basis beträgt.

3. Brennstoffzusammensetzung nach Anspruch 2, dadurch gekennzeichnet, daß die Konzentration des Metalls der Platingruppe zwischen 0,1 und 0,3 ppm

4. Brennstoffzusammensetzung nach einem der Ansprüche 1 bis 3, dadurch gekennzeichnet, daß der organo-metallische Komplex eine Koordinationsverbindung eine Metalls der Platingruppe ist, welches einen Koordinationszustand von +2 hat.

5. Brennstoffzusammensetzung nach Anspruch 4, dadurch gekennzeichnet, daß der organo-metallische Komplex eine Koordinationsverbindung der folgenden Formel ist:

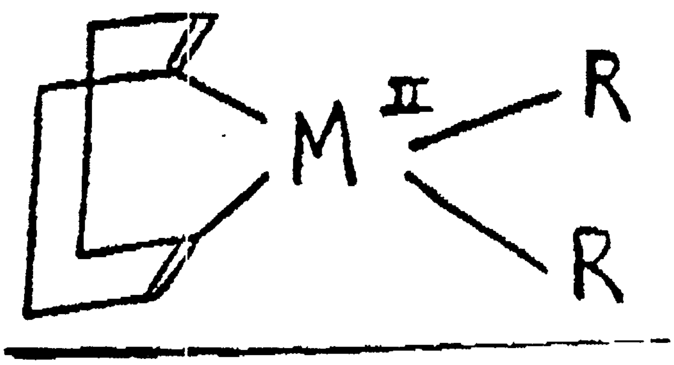

wobei $M^{II}$ das Metall der Platingruppe mit einer Koordination von +2 ist und die R-Gruppen Phenyl, Nitrophenyl oder Benzyl sind.

6. Brennstoffzusammensetzung nach Anspruch 5, dadurch gekennzeichnet, daß in der genannten Formel M Platin ist und die R-Gruppen Benzylgruppen sind.

7. Brennstoffzusammensetzung nach einem der Ansprüche 1 bis 6, dadurch gekennzeichnet, daß die Zusammensetzung zusätzlich bis zu 5 Gew.-% eines Lösungsmittels für die Verbindung des Metalls der Platingruppe enthält, wobei das Lösungsmittel mit dem Brennstoff mischbar ist.

8. Brennstoffzusammensetzung nach Anspruch 7, dadurch gekennzeichnet, daß das Lösungsmittel in einer Menge von 2,25 bis 2,5 Gew.-% vorhanden ist.

9. Brennstoffzusammensetzung nach Anspruch 7 oder 8, dadurch gekennzeichnet, daß das mit Brennstoffmischbare Lösungsmittel ein oxidierter Kohlenwasserstoff ist.

10. Brennstoffzusammensetzung nach Anspruch 9, dadurch gekennzeichnet, daß das Lösungsmittel und die Verbindung des Metalls der Platingruppe ein Gewichtsverhältnis von Sauerstoff zu Metall im Bereich von 1.000:1 bis 100.000:1 haben.

11. Brennstoffzusammensetzung nach Anspruch 10, dadurch gekennzeichnet, daß das Gewichtsverhältnis von Sauerstoff zu Metall zwischen 5.000:1 und 35.000:1

12. Brennstoffzusammensetzung nach Anspruch 9, 10 oder 11, dadurch gekennzeichnet, daß das oxidierte Kohlenwasserstofflösungsmittel ein Ether, ein heterozyklischer Ether oder ein Alkohol ist.

13. Brennstoffzusammensetzung nach Anspruch 12, dadurch gekennzeichnet, daß das Lösungsmittel Ethanol, Tetrahydrofuran oder Methyl t -Butylether ist.

14. Brennstoffzusammensetzung nach Anspruch 7 oder 8, dadurch gekennzeichnet, daß der Brennstoffanteil ein Dieselbrennstoff und das Lösungsmittel Octylnitrat ist.

15. Zusammensetzung eines Zusatzmittels für die Zugabe zu Kraftstoffen für Verbrennungs- uns Dieselmotoren in Mengen, die ausreichend sind, um auf Basis von Gewicht zu Volumen 0,1 bis 1,0 ppm eines Metalls der Platingruppe relativ zu dem Brennstoff bereitzustellen, um dadurch den Wirkungsgrad desselben zu erhöhen und/oder schädliche Gasemissionen von derartigen Motoren zu reduzieren, wobei das Zusatzmittel eine Lösung aus einer in Brennstoff lösbaren Koordinationsverbindung eines Metalls der Platingruppe aufweist, welche ein Metall der Platingruppe mit einem Koordinationszustand von +2 oder +4 hat, wobei mindestens eine Koordinationsstelle in der Verbindung von einer organischen Koordinaationsgruppe besetzt ist, die zumindest eine ungesättigte Kohlenstoff-Kohlenstoffbindung mit einer olefinischen, acetylenischen oder aromatischen pi-Bindungsstruktur hat, in einem oxidierten, mit Brennstoff mischbaren Kohlenwasserstofflösungsmittel oder Octylnitrat und in einer Menge, die ausreichend ist, um in der Zusammensetzung des Zusatzmittels ein Verhältnis des Sauerstoffs zu dem Metall der Platingruppe von 1.000:1 bis 100.000:1 bereitzustellen.

16. Zusammensetzung eines Zusatzmittels nach Anspruch 15, dadurch gekennzeichnet, daß das Lösungsmittel ein Gewichtsverhältnis des Sauerstoffs zum Metall der Platingruppe in der Zusammensetzung des Zusatzmittels im Bereich von 5.000:1 bis 35.000:1 aufweist.

17. Zusammensetzung eines Zusatzmittels nach Anspruch 15 oder 16, wobei dieses für die Zugabe zu dem Brennstoff in einer Menge von bis zu 5 Gew.-% untergebracht ist, um dadurch die erwähnte Menge des Metalls der Platingruppe in dem Brennstoff bereitzustellen.

18. Zusammensetzung für ein Zusatzmittel nach Anspruch 15, 16 oder 17, dadurch gekennzeichnet, daß die Verbindung des Metalls der Platingruppe eine nach einem der Ansprüche 4 bis 6 definierte Verbindung ist.

19. Zusammensetzung eines Zusatzmittels nach einem der Ansprüche 15 bis 18, dadurch gekennzeichnet, daß das Lösungsmittel ein oxidierter, mit Brennstoff mischbarer Kohlenwasserstoff ist.

20. Zusammensetzung eines Zusatzmittels nach Anspruch 19, dadurch gekennzeichnet, daß das Lösungsmittel ein Ether oder Alkohol ist.

21. Zusammensetzung eines Zusatzmittels nach Anspruch 20, dadurch gekennzeichnet, daß das Lösungsmittel Ethanol, Tetrahydrofuran oder Methyl-t -butylether ist.

22. Zusammensetzung eines Zusatzmittels nach einem der Ansprüche 5 bis 18, speziell für die Zugabe zu Dieselkraftstoffen, dadurch gekennzeichnet, daß das Lösungsmittel Octylnitrat ist.

**23.** Verfahren zum Verbessern des Wirkungsgrades und/oder zur Reduzierung schädlicher Abgasemissionen von Verbrennungs- oder Dieselmotoren, welches die Zugabe eines in Brennstoff lösbaren organometallischen Komplexes eine Metalles der Platingruppe zu einem Brennstoff aufweist, der für den Betrieb des Motors verwendet wird, dadurch gekennzeichnet, daß der organo-metallische Komplex eine Koordinationsverbindung der Platinmetallgruppe ist, die ein Metall der Platingruppe aufweist, welches einen +2 oder +4 Koordinationszustand mit zumindest einer Koordinationsstelle in der Verbindung aufweist, welche von einer organischen Koordinationsgruppe besetzt ist, welche zumindest eine nicht gesättigte Kohlenstoff-Kohlenstoffbindung mit einer olefinischen, acetylenischen oder aromatischen Struktur enthält, und daß die Verbindung des Metalls der Platingruppe in einer Menge hinzugegeben wird, die ausreicht, um eine Konzentration des Metalls der Platingruppe auf der Basis Gewicht zu Volumen im Bereich von 0,01 bis 1,0 ppm bereitzustellen.

**24.** Verfahren nach Anspruch 23, dadurch gekennzeichnet, daß die Verbindung des Metalls der Platingruppe in einer Menge hinzugefügt wird, die ausreicht, um auf der gleichen Basis ein Konzentrationsverhältnis von 0,05 bis 0,5 ppm bereitzustellen.

**25.** Verfahren nach Anspruch 23, dadurch gekennzeichnet, daß die Konzentration im Bereich von 0,1 bis ppm liegt.

**26.** Verfahren nach Anspruch 22, 23 oder 24, dadurch gekennzeichnet, daß die Verbindung aus einem Metall der Platingruppe so wie in Anspruch 4, 5 oder 6 dargelegt ist.

**27.** Verfahren nach einem der Ansprüche 23 bis 26, dadurch gekennzeichnet, daß die Verbindung mit dem Metall der Platingruppe den Brennstoff in einer Mischung von bis zu 5 Gew.-% hinzugefügt wird, ausgehend von dem Gewicht des Brennstoffs, welche auch mit dem Brennstoff mischbar ist.

**28.** Verfahren nach Anspruch 27, dadurch gekennzeichnet, daß das Lösungsmittel in einer Menge von 0,25 bis 0,5 Gew.-% hinzugefügt wird, je nach dem Gewicht des Kraftstoffes.

**29.** Verfahren nach Anspruch 27 oder 28, wie es auf einen Dieselmotor angewendet wird und wobei die Verbindung des Metalls der Platingruppe dem Brennstoff unter Hinzumischen von Octylnitrat hinzugefügt wird.

**30.** Verfahren nach einem der Ansprüche 23 bis 28, wobei das Lösungsmittel ein oxidierter Kohlenwasserstoff ist, der ein Gewichtsverhältnis von Sauerstoff zu dem Metall der Platingruppe in dem Brennstoff von 1.000:1 bis 1000.000:1 bereitstellt.

**31.** Verfahren nach Anspruch 30, dadurch gekennzeichnet, daß das Verhältnis im Bereich von 5.000:1 bis 35.000:1 liegt.

**32.** Verfahren nach Anspruch 30 oder 31, dadurch gekennzeichent, daß das oxidierte Kohlenwasserstofflösungsmittel ein Ether, ein hetrozyklischer Ether oder ein Alkohol ist.

**33.** Verfahren nach Anspruch 30 oder 31, wobei das Lösungsmittel Ethanol, Tetrahydrofuran oder Methyl-t-butylether ist.